(19) Europäisches Patentamt / European Patent Office / Office européen des brevets

(11) **EP 3 352 031 B1**

(12) **FASCICULE DE BREVET EUROPEEN**

(45) Date de publication et mention
de la délivrance du brevet:
**20.11.2019 Bulletin 2019/47**

(51) Int Cl.:
***G05B 19/4093*** *(2006.01)*

(21) Numéro de dépôt: **18152190.7**

(22) Date de dépôt: **17.01.2018**

(54) **PROCÉDÉ DE DÉTERMINATION DU TRAJET D'UN OUTIL DE FRAISAGE EMPLOYÉ POUR LA PRÉPARATION D'UNE PIÈCE AVANT FINITION**

VERFAHREN ZUR BESTIMMUNG DES BAHNES EINES FRÄSWERKZEUGS ZUR BEARBEITUNG EINES WERKSTÜCKS VOR DER FEINVORGÄNGEN

METHOD FOR DETERMINING THE PATH OF A MILLING TOOL FOR MACHINING A WORKPIECE BEFORE THE FINISHED STEP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.01.2017 FR 1750493**

(43) Date de publication de la demande:
**25.07.2018 Bulletin 2018/30**

(73) Titulaire: **GO2CAM INTERNATIONAL**
**69007 Lyon (FR)**

(72) Inventeurs:
• **YU, Zhan Qing**
  **69006 Lyon (FR)**
• **GERVAL, Eric**
  **69004 Lyon (FR)**

(74) Mandataire: **GIE Innovation Competence Group**
**310, avenue Berthelot**
**69372 Lyon Cedex 08 (FR)**

(56) Documents cités:
**US-A1- 2013 151 000    US-B1- 6 428 252**

## Description

### Domaine technique de l'invention

La présente invention se rapporte à un procédé de détermination du trajet d'un outil de fraisage, employé pour la préparation d'une pièce avant la finition.

### Etat de la technique

La fabrication d'une pièce par fraisage (fraisage en roulant dans laquelle la surface usinée de la pièce est tangente à la génératrice de l'outil de fraisage) est généralement mise en œuvre en plusieurs étapes. Une première étape, que l'on pourrait qualifier d'étape de préparation, consiste en la réalisation d'une ébauche, permettant d'enlever une grande quantité de matière, tout en laissant une certaine épaisseur de matière pour une deuxième étape de finition. Cette deuxième étape de finition consiste à enlever la dernière épaisseur de matière pour obtenir le profil final de pièce.

Il est à noter que les étapes de préparation de la pièce et de finition peuvent être mises en œuvre avec des outils différents, présentant notamment un diamètre différent. On aura par exemple un outil de fraisage de préparation et un outil de fraisage de finition.

Dans chacune des étapes de réalisation de la pièce par fraisage, il est primordial de tenir compte de certaines contraintes. L'une de ces contraintes réside dans une maitrise de l'angle d'engagement de l'outil sur la pièce pour que celui-ci reste inférieur à une valeur maximale, ceci de manière à :

- Assurer un temps de production le plus court possible ;
- Obtenir une pièce de la meilleure qualité possible ;
- Allonger la durée de vie de l'outil employé ;

Or, répondre à cette contrainte liée à la maitrise de l'angle d'engagement de l'outil sur la pièce n'est pas aisé puisque la pièce à usiner présente souvent une forme qui entraîne des efforts de coupe différents lors du trajet de l'outil. On verra ci-dessous que, même en laissant une surépaisseur de matière constante après l'étape de préparation, l'angle d'engagement de l'outil de fraisage de finition, utilisé pour enlever cette dernière couche de matière lors de l'étape de finition, varie lors du trajet de l'outil. Il en résulte que l'étape de préparation de la pièce est primordiale et nécessite une attention particulière pour que l'étape de finition puisse se dérouler au mieux en répondant aux différentes contraintes listées ci-dessus. Le document US 2013/151000 A1 décrit une telle procédure.

### Exposé de l'invention

Ce but est atteint par un procédé de détermination du trajet d'un outil de fraisage de préparation employé pour la préparation d'une pièce avant sa finition par un outil de fraisage de finition, ledit procédé étant tel que défini en revendication 1.

Des particularités de ce procédé sont également définies dans les revendications dépendantes.

L'invention concerne également un système de détermination du trajet d'un outil de fraisage de préparation employé pour la préparation d'une pièce avant sa finition par un outil de fraisage de finition, ledit système étant tel que défini en revendication 8.

Des particularités du système sont également définies dans les revendications dépendantes.

L'invention concerne également un programme d'ordinateur comprenant des modules ou instructions logiciels destinés à être exécutés sur un ordinateur de manière à mettre en œuvre le procédé tel que défini ci-dessus.

L'invention concerne également un support de stockage lisible par un ordinateur comportant le programme d'ordinateur défini ci-dessus.

### Brève description des figures

D'autres caractéristiques et avantages vont apparaître dans la description détaillée qui suit faite en regard des dessins annexés dans lesquels :

- La figure 1 permet d'illustrer la variation de l'effort de coupe fournie par un outil de fraisage de finition lors d'une étape de finition d'une pièce ;
- La figure 2 représente un profil final de pièce à obtenir par fraisage par un outil de fraisage de finition et illustre le principe de division du profil de la pièce en plusieurs portions ;
- Les figures 3A à 3C représentent les différentes portions de la pièce et illustrent le principe du maintien d'un angle d'engagement constant sur chacune des portions ;
- Les figures 4A et 4B représentent un premier profil de pièce obtenu permettant de respecter une contrainte maximale sur l'angle d'engagement de l'outil de fraisage de finition et un trajet suivi par l'outil de fraisage de finition pour garder cet angle d'engagement à une valeur fixe maximale ;
- La figure 5 représente notamment un premier trajet suivi par l'outil de fraisage de préparation pour réaliser le premier profil de pièce des figures 4A et 4B ;
- Les figures 6A à 6E illustrent les différentes étapes d'obtention d'un deuxième profil de pièce avant finition et l'obtention d'un deuxième trajet suivi par l'outil de fraisage de préparation pour obtenir ce deuxième profil de pièce ;
- Les figures 7A à 7E illustrent les différentes étapes d'obtention d'un troisième profil de pièce avant finition et l'obtention d'un troisième trajet suivi par l'outil de fraisage de préparation pour obtenir ce troisième profil de pièce ;
- La figure 8 représente un quatrième profil de pièce avant finition ;

**Description détaillée d'au moins un mode de réalisation**

Dans l'ensemble du texte, il faut comprendre que l'invention concerne l'usinage d'une pièce par fraisage "en roulant", c'est-à-dire dans lequel la surface usinée de la pièce est tangente à la génératrice de la fraise. L'invention pourra s'appliquer à un fraisage dit "en avalant" ou "en opposition".

Dans la suite de la description, on distinguera l'étape de préparation ou semi-finition de la pièce de l'étape de finition. L'étape de préparation consiste à préparer la pièce jusqu'à laisser une dernière épaisseur de matière qui sera enlevée lors de l'étape de finition. La première étape est mise en œuvre à l'aide d'un outil de fraisage de préparation S ou autrement dit de semi-finition et l'étape de finition est mise en œuvre à l'aide d'un outil de fraisage de finition F. Les deux outils sont préférentiellement de section circulaire et présentent chacun un diamètre ou rayon connu. Dans la suite de la description et de manière non limitative, l'outil de fraisage de finition F est choisi avec un rayon Rf supérieur au rayon Rs de l'outil de fraisage de préparation S.

Dans la suite de la description, on considère l'angle d'engagement d'un outil de fraisage (de finition ou de préparation) comme l'angle de contact entre l'outil et la matière à usiner.

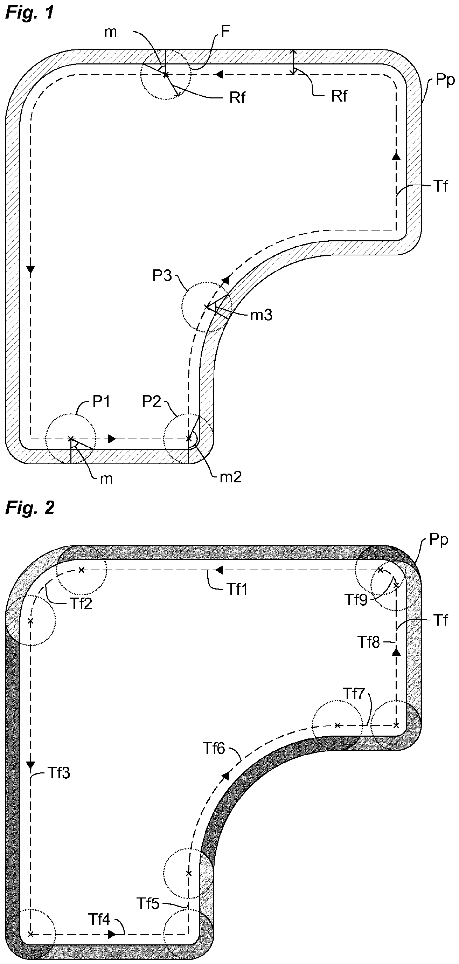

A l'issue de l'étape de préparation de la pièce, une surépaisseur de matière est volontairement laissée pour que celle-ci soit enlevée par l'outil de fraisage de finition F lors de l'étape de finition. On comprend de la figure 1 que laisser une surépaisseur constante sur la pièce pourra entraîner, selon la forme de la pièce à réaliser, des efforts de coupe différents pour l'outil de fraisage de finition. Sur cette figure 1, l'angle d'engagement de l'outil de fraisage est par exemple à une première valeur m1 lorsque l'outil de fraisage de finition F est sur une portion rectiligne (portion P1) mais prend une valeur m2 plus élevée lorsque l'outil de fraisage de finition F usine une partie coudée ou un angle droit (portion P2) ou encore une autre valeur m3 lorsqu'il usine une portion en arc de cercle (portion P3). Or, comme déjà décrit ci-dessus, il est préférable que cet angle d'engagement de l'outil de fraisage de finition reste toujours inférieur ou égal à une valeur maximale. La surépaisseur de matière laissée à l'issue de l'étape de préparation de la pièce devra permettre d'assurer que, lors de l'étape de finition, l'angle d'engagement de l'outil de fraisage de finition sur la matière reste toujours inférieur ou égal à une valeur maximale m déterminée. Il en ressort donc que le profil de pièce définissant la zone à usiner par l'outil de fraisage de finition F doit être adaptée pour que l'outil de fraisage de finition F puisse l'usiner avec un angle d'engagement toujours inférieur ou égal à une valeur maximale m déterminée.

Dans la suite de la description, on définit au moins :

- Un profil préparé ou semi-fini Pb de pièce, obtenu à l'issue de l'étape de préparation et avant l'étape de finition ;
- Un profil final Pp de pièce, obtenu à l'issue de l'étape de finition et correspondant au profil de pièce souhaité ;

Dans la suite de la description, la valeur maximale d'angle d'engagement à respecter pour l'outil de fraisage de finition est référencé "m".

Dans la suite de la description, les termes "trajet" et "trajectoire" sont utilisés de manière indifférente et ont la même signification.

L'invention vise notamment à déterminer la surépaisseur de matière à laisser à l'issue de l'étape de préparation de la pièce pour que l'étape de finition se déroule en respectant les contraintes fixées ci-dessus. De manière plus précise, l'invention vise à déterminer le profil préparé ou semi-fini optimal de pièce et donc le trajet de l'outil de fraisage de préparation S pour obtenir cette surépaisseur.

Les figures 1 et 2 représentent le profil Pp de pièce que l'on souhaite obtenir à l'issue de l'étape de finition. La description ci-dessous explique les différentes étapes d'un procédé de détermination du trajet de l'outil de fraisage de préparation S lors d'une étape de préparation de la pièce, pour qu'à l'issue de cette étape de préparation, l'épaisseur de matière restant à enlever lors de l'étape de finition soit optimale pour que l'outil de fraisage de finition F travaille avec un angle d'engagement inférieur ou égal à ladite valeur maximale m.

Le procédé de détermination du trajet de l'outil de fraisage de préparation est mis en œuvre par une unité de traitement (par exemple un ordinateur ou un automate programmable) qui comporte au moins un microprocesseur et une mémoire. Ce procédé comporte plusieurs étapes mises en œuvre sous la forme de plusieurs modules logiciels de détermination stockés sur un support lisible et exécutés par l'unité de traitement. Le procédé pourra comporter avantageusement une première étape de modélisation du profil final Pp de pièce à obtenir et une étape de détermination de la forme du bloc de matière brut à usiner pour obtenir ce profil final Pp. Cette étape de détermination pourra être mise en œuvre par saisie de paramètres dimensionnels du bloc de matière brut ou à l'aide de capteurs pour acquérir lesdits paramètres. L'invention concerne également le système de détermination du trajet de l'outil de fraisage de préparation pour réaliser la préparation de la pièce. Ce système comporte notamment ladite unité de traitement et les modules logiciels exécutés pour mettre en œuvre le procédé de l'invention.

**Etape 1**

Cette première étape vise à déterminer un premier profil préparé Pb de pièce en tenant compte de premiers paramètres d'entrée. Ces paramètres d'entrée sont les suivants :

- Le diamètre Df de l'outil de fraisage de finition F, ou le rayon Rf de l'outil de fraisage de finition F ;
- La valeur maximale m souhaitée pour l'angle d'engagement de l'outil de fraisage de finition F ;
- La trajectoire Tf suivie par l'outil de fraisage de finition lors de l'étape de finition, cette trajectoire Tf étant composée de segments de droite et d'arcs de cercle ;

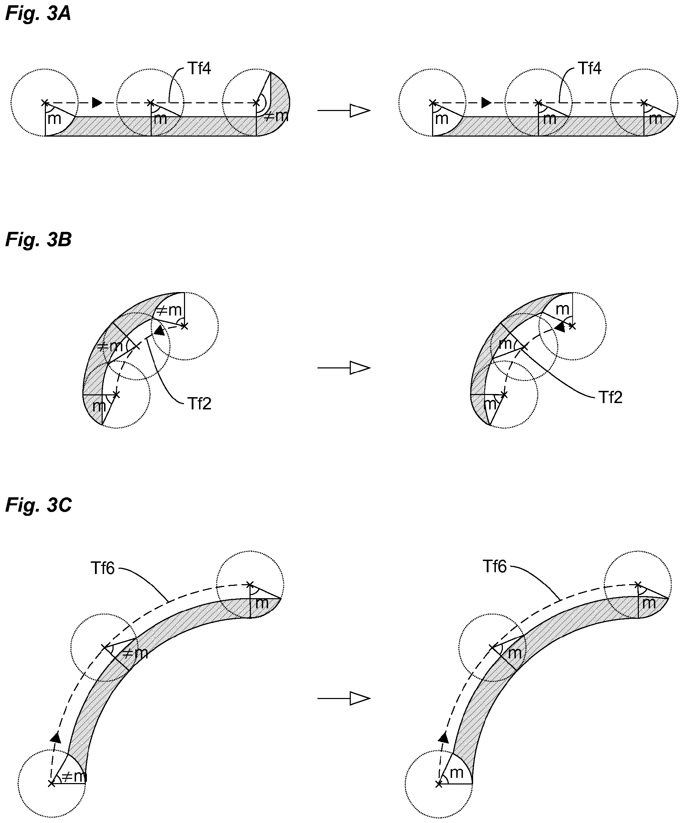

Cette étape vise notamment à diviser le profil final Pp de pièce en plusieurs portions composés de segments de droite et d'arcs de cercle. La figure 2 représente le découpage du profil final Pp de pièce en plusieurs portions et illustrent le découpage du trajet Tf de l'outil de fraisage de finition F en plusieurs trajets successifs (référencés Tf1 à Tf9). Les figures 3A à 3C représentent trois configurations rencontrées par l'outil de fraisage de finition lors de son trajet.

Sur la figure 3A, l'outil de fraisage de finition parcourt un trajet Tf4 rectiligne. L'angle d'engagement de l'outil de finition avec la matière sera constant et égal à m sur cette portion.

Les figures 3B et 3C représentent le trajet de l'outil de finition suivant deux arcs de cercle, respectivement suivant une forme concave et suivant une forme convexe.

Sur la figure 3B, on comprend que pour garder un angle d'engagement égal à la valeur maximale m, l'épaisseur de la zone Zb devra être adaptée pour répondre à la contrainte maximale sur l'angle d'engagement. Le trajet Tf2 suivi par l'outil de fraisage de finition F sur cette portion est alors décalé de la valeur de son rayon Rf pour usiner le profil de pièce en respectant la contrainte maximale sur l'angle d'engagement.

Il en est de même pour le profil convexe représenté sur la figure 3C où l'épaisseur de la zone Zb doit être adaptée pour maintenir l'angle d'engagement de l'outil égal à la valeur maximale m. Le trajet Tf6 suivi par l'outil de fraisage de finition sur cette portion est alors décalé de la valeur de son rayon Rf pour usiner le profil de pièce en respectant la contrainte maximale sur l'angle d'engagement.

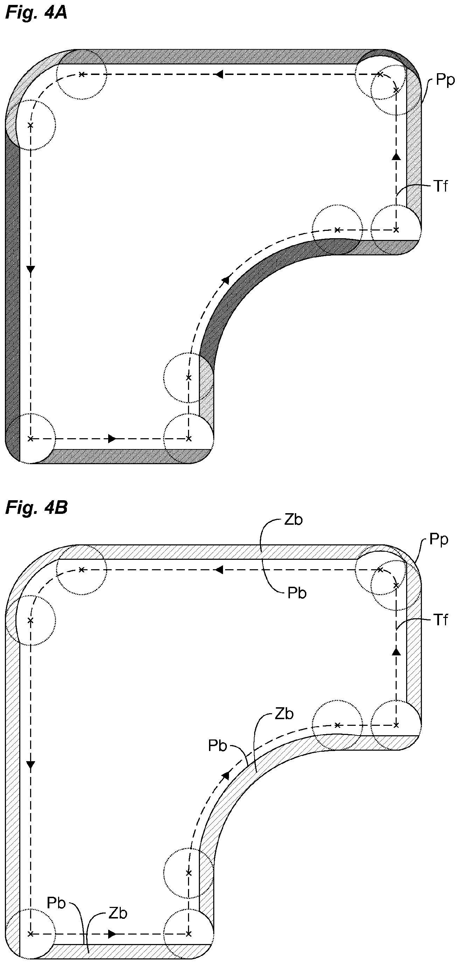

En divisant le profil de la pièce en plusieurs portions telles que celles définies ci-dessus (voir figure 4A) et en concaténant les différents trajets suivis par l'outil pour former chacune des portions, on obtient un premier profil préparé Pb qui respecte la valeur maximale m d'angle d'engagement de l'outil de fraisage de finition sur la matière et le trajet Tf correspondant de l'outil de fraisage de finition pour usiner la zone Zb et obtenir ce profil final de pièce Pp. Ce premier profil Pb est représenté sur la figure 4B. Il définit une zone Zb formant la surépaisseur à retirer par l'outil de fraisage de finition F lors de l'étape de finition. Cette zone Zb est définie par plusieurs profils Pb qui permettent de respecter l'angle d'engagement maximal m de l'outil de fraisage de finition F lors de l'étape de finition. Sur la figure 4B, le profil référencé Pb correspond au profil maximal préparé, c'est-à-dire au profil qui respecte la contrainte maximale m sur l'angle d'engagement de l'outil de fraisage de finition avec la matière. Dans la suite de la description, on s'intéressera à ce profil Pb.

**Etape 2**

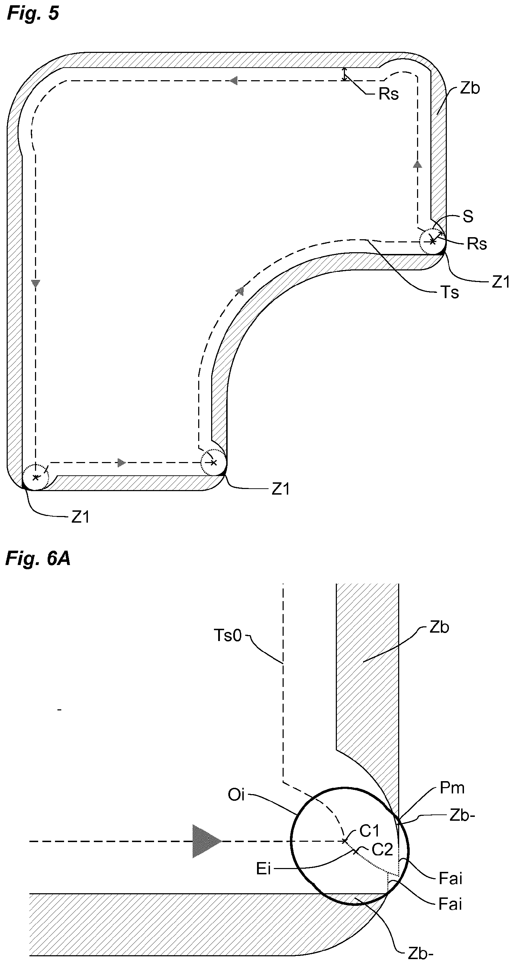

Même si le profil Pb est adapté pour répondre à la contrainte maximale sur l'angle d'engagement de l'outil de fraisage de finition avec la matière, le procédé de détermination de l'invention doit également tenir compte de l'outil de fraisage de préparation qui permet de réaliser ce profil Pb. En effet, le procédé de l'invention doit tenir compte du fait que le diamètre Ds de l'outil de fraisage de préparation S (ou son rayon Rs) est non nul, ce qui rend le profil Pb pas forcément réalisable en suivant un trajet Ts0 tel que représenté sur la figure 5. Ce trajet Ts0 est déterminé en décalant le profil Pb de la valeur du rayon Rs de l'outil de fraisage de préparation S. Sur la figure 5, on peut ainsi voir que le suivi de ce trajet Ts0 par l'outil de fraisage de préparation S ne permet pas d'obtenir exactement le profil Pb déterminé lors de la première étape ci-dessus. De la figure 5, on comprend que sur son trajet Ts0, l'outil de fraisage de préparation S laisserait par exemple plusieurs zones Z1 de surplus de matière, dont le maintien ne permettrait pas de répondre à la contrainte maximale sur l'angle d'engagement de l'outil de fraisage de finition F avec la matière, ou autrement dit d'obtenir exactement le profil de pièce Pb déterminé lors de la première étape.

Selon un aspect de l'invention, le procédé vise donc également à déterminer quelles sont ces zones Z1 non usinables de la zone Zb par l'outil de fraisage de préparation en suivant le trajet Ts0 et à corriger ce trajet Ts0 de l'outil de fraisage de préparation S de manière à lui permettre d'usiner ces zones. Le procédé vise également à déterminer un profil préparé Ps de pièce, éventuellement différent du profil Pb, qui puisse à la fois être réalisable par l'outil de fraisage de préparation S et qui respecte la contrainte maximale de l'angle d'engagement de l'outil de fraisage de finition F lors de l'étape de finition.

Selon un aspect de l'invention, pour déterminer ces zones Z1 non usinables de la zone Zb par l'outil de fraisage de préparation S, le procédé de l'invention reçoit alors en entrée :

- Le diamètre Ds de l'outil de fraisage de préparation, ou son rayon Rs ;
- Le profil final Pp de la pièce ;
- Au moins un profil Pb obtenu lors de la première étape ;

Il est à noter que si Rf>Rs, l'outil de fraisage de préparation S peut usiner une zone plus grande que l'outil de fraisage de finition F (comme dans l'exemple de la présente description). Si l'utilisateur préfère restreindre la zone d'usinage à l'intérieur de la zone usinable par l'outil de fraisage de finition F, alors le profil final Pp de pièce est défini par un simple décalage de la trajectoire de l'outil de finition Tf d'une valeur Rf.

Le procédé crée ainsi une trajectoire de préparation dite "primaire", notée Ts1, qui permet de réaliser la majeure partie de la zone Zb définie ci-dessus. Pour créer cette trajectoire Ts1, le procédé pourra par exemple comporter les étapes 1) à 7) définies ci-dessous. Cependant, il faut comprendre que ces étapes sont des modélisations mathématiques du principe mis en œuvre. Elles sont donc simplement décrites pour mieux comprendre le principe de l'invention. D'autres solutions pourraient bien entendu être imaginées avec un résultat similaire.

1). Création d'un diagramme de Voronoi sur Pb , noté Vr ;
Le diagramme de Voronoi consiste en un ensemble d'arêtes, chaque arête étant formée de plusieurs points depuis lesquels la distance (suivant une trajectoire rectiligne) par rapport au profil Pb est connue. Ainsi, dans l'application de l'invention, le diagramme de Voronoi permet de localiser les zones Z1 non usinables de Zb avec un outil de fraisage de préparation de rayon Rs. Il permet également de définir un ensemble de points sur lesquels il est possible de placer l'outil de fraisage de préparation pour réaliser la zone Zb avec le minimum de déformation sur la pièce, c'est-à-dire en usinant le moins possible la zone Zb.
Pour chaque zone non usinable de Zb, il s'agit ainsi de créer virtuellement une zone qui englobe la zone non-usinable de Zb et qui présente le minimum d'impact sur le profil de pièce Pb. Pour des soucis de simplification, le digramme de Voronoi complet n'a pas été représenté sur les figures annexées et seules quelques arêtes d'intérêt sont montrées sur la figure 6A.

2). Sur l'ensemble des arêtes du diagramme de Voronoi Vr, choisir celles qui ont seulement une extrémité située à une distance inférieure au rayon Rs de l'outil de fraisage de préparation S ; cet ensemble est noté Ev ;
Il s'agit alors de restreindre le domaine d'application du diagramme de Voronoi aux zones de déplacement potentielles de l'outil de fraisage de préparation S.

3). Pour chaque arête Ei de Voronoi dans l'ensemble Ev, choisir l'extrémité la plus proche du profil préparé Pb et construire un arbre regroupant toutes les arêtes liées à l'extrémité choisie de Ei en respectant un principe de décroissance de distance de chaque arête vers le profil Pb ; noter A1, A2, ... An, les n arbres construits, chaque arbre ayant une racine formée d'une arête Ei ;
A titre d'exemple, la figure 6A représente un arbre Ai avec sa racine Ei prolongée par deux "feuilles" référencées Fai.

4). Pour chaque arbre Ai, (i=1, ...n) construit dans 3), définir deux points C1 et C2.
Le point C1 est le point situé sur la racine Ei dont la distance (suivant une trajectoire rectiligne) au profil Pb est égale au rayon Rs. Comme représenté sur la figure 6A, on comprend que ce point définit le centre d'un cercle de rayon Rs qui permet d'usiner exactement un profil préparé Ps de pièce qui est réalisable.
Le point C2 est défini par :

$$X = Xm - Vx*Rs;$$

$$Y = Ym - Vy*Rs;$$

Avec :

- Rs qui est le rayon de l'outil de préparation/semi finition ;
- <Xm,Ym> sont les coordonnées du point Pm, le plus éloigné de C1 parmi les points de Ai ;
- <Vx,Vy> est le vecteur unitaire de C1 au point <Xm,Ym> ;

Le point C2 est le centre d'un cercle de rayon Rs situé sur la racine Ei et qui englobe la zone non usinable de Zb, tout en entraînant le minimum de déformation sur la zone Zb.
Les deux cercles de centre C1 et C2 représentent ainsi deux positions extrêmes pouvant être prises virtuellement par l'outil de fraisage de préparation en se déplaçant sur la racine Ei.
A partir des deux cercles de centres C1 et C2, le procédé consiste ensuite à créer un oblong Oi dont les deux cercles extrêmes ont pour rayon Rs et à soustraire de cet oblong Oi la zone Z1 de Zb qui était non usinable.
La figure 6A illustre ce principe. Cette figure montre notamment les deux zones référencées Zb- qui seraient retirées de la zone Zb par l'outil de fraisage de préparation lorsque celui-ci est dans sa position extrême définie par le point C2.

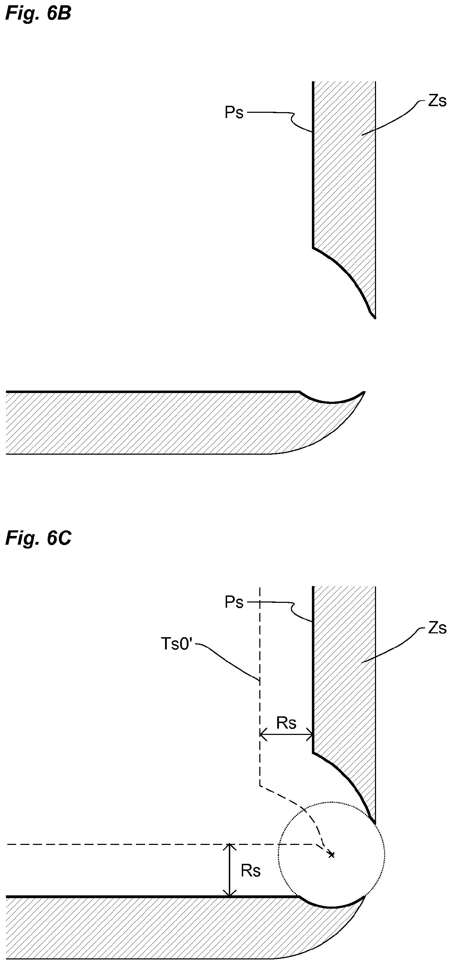

La figure 6B montre également le profil préparé Ps de pièce réalisable qui serait obtenu par le passage de l'outil de fraisage de préparation S.

5). Le procédé consiste ensuite à décaler les profils obtenus par 4) de la valeur du rayon Rs, pour obtenir une trajectoire Ts0'.

Il s'agit alors de réaliser un décalage pour définir un trajet d'outil qui permet d'usiner le profil Ps, mais sans tenir compte d'une possible collision avec la pièce (définie par le profil Pp). La figure 6C illustre ce principe. On comprend de cette figure 6C que le seul décalage du profil obtenu par 4) de la valeur du rayon Rs n'est pas forcément suffisant car il ne tient pas compte du fait que l'outil de fraisage de préparation S de rayon Rs puisse entrer en collision avec le profil final Pp de pièce s'il suivait ce trajet Ts0'.

6). Le procédé consiste donc à décaler les profils de la pièce finale Pp de la valeur du rayon Rs, pour obtenir une trajectoire Ts0".

Il s'agit alors de réaliser un décalage pour s'assurer que l'outil de fraisage de préparation S ne vienne pas en collision avec la pièce et le profil Pp.

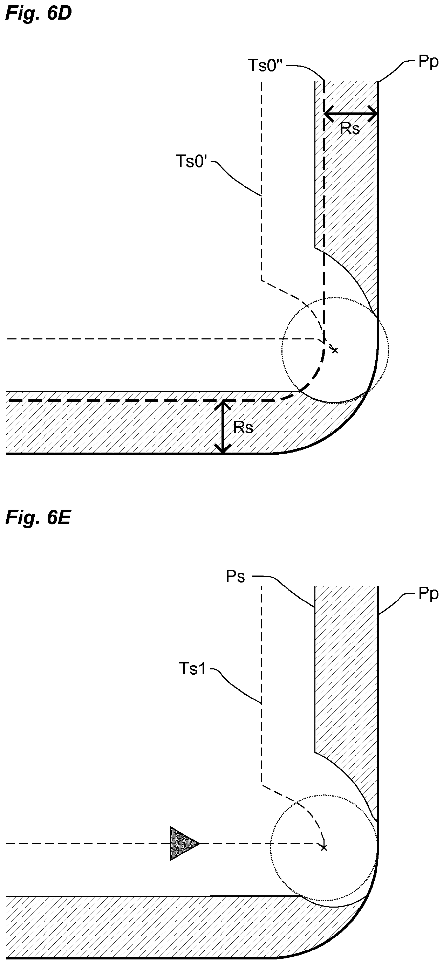

La figure 6D représente la trajectoire Ts0". Elle montre également le trajet Ts0' dont le suivi entraîne une collision avec le profil final Pp de pièce.

7). Le procédé consiste ensuite à réaliser l'opération booléenne de l'intersection de Ts0' et Ts0", pour obtenir Ts1 qui représente le trajet que doit suivre l'outil de fraisage de préparation pour réaliser un profil préparé Ps, c'est-à-dire semi-fini.

La figure 6E représente ladite trajectoire Ts1 à suivre pour l'outil de fraisage de préparation S. En suivant ce trajet Ts1, l'outil de fraisage de préparation S sera en mesure de générer un profil Ps tout en évitant toute collision avec le profil final Pp de la pièce.

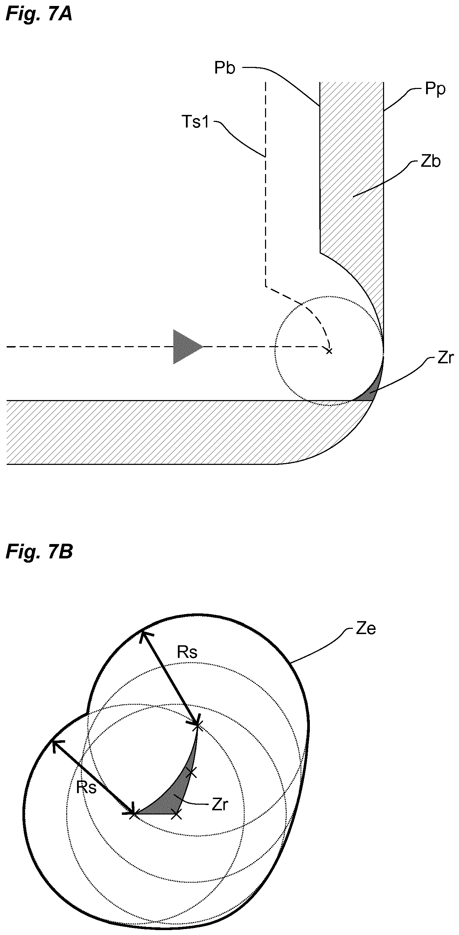

Selon un aspect avantageux de l'invention, le procédé peut également créer un trajet secondaire, désigné Ts2, permettant de compléter la préparation de la pièce. Il faut noter que le suivi du trajet Ts1 par l'outil de fraisage de préparation S ne permet pas d'obtenir un profil de pièce qui répond entièrement à la contrainte maximale sur l'angle d'engagement de l'outil de fraisage de finition F. La figure 7A montre en effet que certains surplus de matière pourraient subsister dans la zone Zb après le passage de l'outil de fraisage de préparation suivant le trajet Ts1 défini ci-dessus. Optionnellement, le procédé peut ainsi corriger le trajet Ts1 en créant le trajet Ts2 pour enlever ces surplus de matière.

Pour déterminer ce trajet Ts2, le procédé met en œuvre les étapes 1) à 5) décrites ci-dessous.

1). Le procédé consiste à définir la zone de matière non usinée par le trajet de préparation/semi finition Ts1, et en dehors de la zone Zb ; cette zone est notée Zr et correspond au surplus de matière qui devrait être à retirer lors de l'étape de préparation de la pièce pour répondre entièrement à la contrainte maximale sur l'angle d'engagement de l'outil de fraisage de finition F lors de l'étape de finition de la pièce ;

La figure 7A permet de définir la zone Zr non usinable par l'outil de fraisage de préparation lors du suivi du trajet Ts1.

2). Le procédé consiste ensuite à décaler les profils de Zr vers l'extérieur de la valeur du rayon Rs ; noter cette zone Ze ;

La figure 7B permet d'illustrer cette étape. Elle représente la zone Zr non usinable par le trajet Ts1 et la génération de la zone Ze par décalage du rayon Rs de l'outil de fraisage de préparation S.

3). Le procédé consiste ensuite à décaler les profils de la pièce finale Pp d'une valeur Rs pour obtenir la zone d'usinage maximale pour l'outil de fraisage de préparation ; noter cette zone Zh ;

Comme décrit précédemment, cette zone Zh est délimitée par le trajet Ts0" déjà évoqué ci-dessus. Elle correspond la zone dans laquelle l'outil de fraisage de préparation S peut se déplacer sans risque de collision avec la pièce, le trajet Ts0" correspondant à la limite à ne pas dépasser.

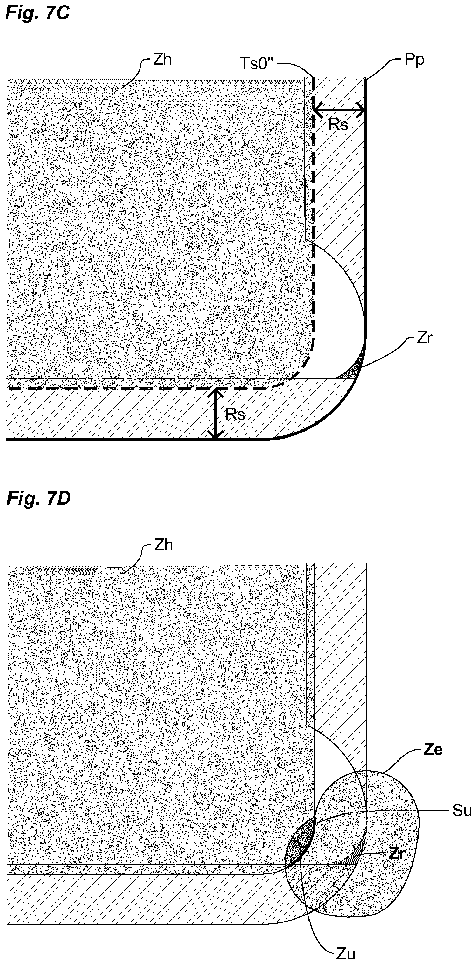

La figure 7C montre l'espace occupé par cette zone Zh.

4). Le procédé consiste ensuite à réaliser l'opération booléenne d'intersection des zones Ze et Zh déterminées préalablement ; noter cette zone Zu.

Le contour de la zone Zu qui est commun à Zh correspond ainsi à un segment Su sur lequel peut se déplacer l'outil de fraisage de préparation S pour usiner la zone Zr sans risquer d'attaquer le profil final de la pièce Pp.

La figure 7D illustre cette opération, montre la zone Zu obtenue et le segment Su.

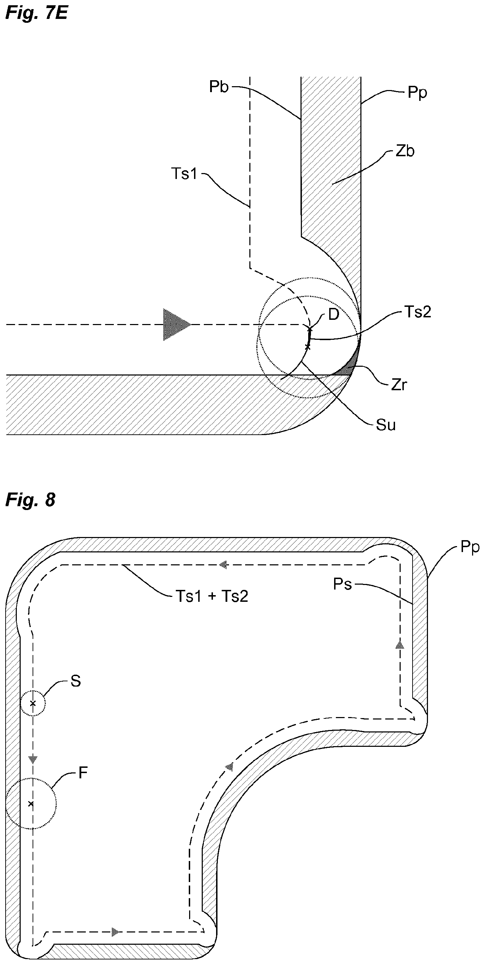

5). Pour des raisons de simplicités de présentation et d'explications, nous prenons le cas particulier où le trajet Ts1 déterminé préalablement coupe le segment Su. Dans ce cas, le procédé consiste à noter D un point commun de Ts1 et Su. Le procédé consiste ensuite à créer un trajet Ts2, de longueur minimale sur le segment Su (c'est-à-dire entre D et un point de Su), de manière qu'un outil de fraisage de préparation S de rayon Rs, en suivant ce trajet Ts2, usine complètement la zone Zr. En usinant la zone Zr, l'outil de fraisage de préparation sera amené à attaquer la zone Zb comme on peut le voir sur la figure 7E, mais il ne viendra pas en collision avec la pièce, c'est-à-dire avec le profil final Pp de pièce.

La figure 7E représente le trajet Ts2 ainsi obtenu.

Dans le cas plus général où le trajet Ts1 ne couperait pas le segment Su, le procédé consiste d'abord à créer un premier trajet entre un premier point du trajet de Ts1 qui est le plus proche de la zone Zu et un deuxième point situé dans la zone Zu qui est le plus proche du premier point susmentionné. Sur la figure 7E, les deux points sont en fait confondus. Ensuite, le procédé consiste à déterminer un deuxième trajet minimal entre ce deuxième point et un point situé sur le segment Su de sorte qu'un outil de rayon Rs usine complètement la zone Zr. Le trajet Ts2 sera alors la réunion de ces deux trajets.

La figure 8 représente la réunion du trajet Ts1 et du trajet Ts2 obtenu afin de déterminer les profils préparés Ps de pièce, définissant une zone d'usinage réalisable avec tous les outils de fraisage dont le rayon est inférieur ou égal à Rs et en respectant la contrainte sur une valeur maximale m pour l'angle d'engagement de l'outil de fraisage de finition F.

Une fois le trajet déterminé (Ts1, éventuellement Ts2 et la réunion de Ts1 et Ts2), celui-ci est exécuté par un dispositif de commande d'une machine d'usinage. Celle-ci sera amenée à réaliser l'usinage de préparation à l'aide de l'outil de fraisage de préparation S puis éventuellement l'usinage de finition à l'aide de l'outil de fraisage de finition F. L'étape de fraisage de préparation est avantageusement incluse dans un procédé de commande d'un outil de fraisage de préparation S qui inclut le procédé de détermination du trajet de l'outil de fraisage de préparation de l'invention, décrit ci-dessus.

## Revendications

1. Procédé de détermination du trajet d'un outil de fraisage de préparation (S) employé pour la préparation d'une pièce avant sa finition par un outil de fraisage de finition, **caractérisé en ce qu'**il comporte les étapes suivantes :

   - Détermination d'un premier profil préparé (Pb) de pièce définissant une zone (Zb) de matière à enlever par l'outil de fraisage de finition (F) et tenant compte du rayon (Rf) de l'outil de fraisage de finition (F) employé pour la finition, d'au moins une valeur maximale (m) d'angle d'engagement pour ledit outil de fraisage de finition (F) lors de l'usinage et d'une trajectoire (Tf) de l'outil de fraisage de finition pour réaliser ledit premier profil préparé (Pb) ;
   - Détermination d'une première trajectoire (Ts0) de l'outil de fraisage de préparation (S) pour réaliser ledit premier profil préparé (Pb) de pièce ;
   - Détermination d'au moins une première zone (Z1) non usinable dudit premier profil préparé (Pb) par l'outil de fraisage de préparation (S) qui suit ladite première trajectoire (Ts0) déterminée en tenant compte du rayon (Rs) de l'outil de fraisage de préparation (S) ;
   - Détermination d'une deuxième trajectoire (Ts1) de l'outil de fraisage de préparation (S) pour réaliser un deuxième profil préparé (Ps) de pièce tenant compte du rayon (Rs) dudit outil de fraisage de préparation (S), dudit au moins premier profil préparé (Pb) de pièce et d'un profil final (Pp) de pièce obtenu après finition.

2. Procédé selon la revendication 1, **caractérisé en ce que** ladite trajectoire (Tf) de l'outil de fraisage de finition (F) pour réaliser ledit premier profil préparé (Pb) de pièce est déterminée en divisant en plusieurs portions une zone balayée par le mouvement de l'outil de fraisage de finition (F) avec ladite valeur maximale (m) d'angle d'engagement.

3. Procédé selon la revendication 1 ou 2, **caractérisé en ce qu'**il comporte une étape de détermination d'un cercle ayant pour rayon ledit rayon (Rs) de l'outil de fraisage de préparation (S) et englobant ladite première zone (Z1) non usinable.

4. Procédé selon la revendication 3, **caractérisé en ce que** ledit cercle est déterminé en réalisant un diagramme de Voronoi sur le premier profil préparé (Pb) de pièce.

5. Procédé selon l'une des revendications 1 à 4, **caractérisé en ce qu'**il comporte :

   - Une étape supplémentaire de détermination d'au moins une deuxième zone (Zr) non usinable dudit deuxième profil préparé (Ps) par l'outil de fraisage de préparation (S) à partir dudit premier profil préparé (Pb) en suivant ladite deuxième trajectoire (Ts1);
   - Une étape de détermination d'un segment de déplacement (Su) sur lequel peut se déplacer l'outil de fraisage de préparation (S) pour usiner ladite deuxième zone (Zr) non usinable ;
   - Une étape de détermination d'une troisième trajectoire (Ts2) pour l'outil de fraisage de préparation entre un point situé sur la deuxième trajectoire (Ts1) et un point situé sur ledit segment de déplacement (Su) pour usiner ladite deuxième zone (Zr) non usinable.

6. Procédé selon la revendication 5, **caractérisé en ce qu'**il comporte une étape de réunion de la deuxième trajectoire (Ts1) et de la troisième trajectoire (Ts2).

7. Procédé selon la revendication 5 ou 6, **caractérisé en ce que** le segment de déplacement (Su) est obtenu en réalisant une intersection entre une zone (Ze) obtenue par un décalage de la deuxième zone non usinable d'une valeur (Rs) de rayon de l'outil de fraisage de préparation (S) et d'une zone obtenue par un décalage du profil final (Pp) de pièce d'une valeur (Rs) du rayon de l'outil de fraisage de préparation (S).

8. Système de détermination du trajet d'un outil de fraisage de préparation (S) employé pour la préparation d'une pièce avant sa finition par un outil de fraisage de finition, **caractérisé en ce qu'**il comporte :

- Un module de détermination d'un premier profil préparé (Pb) de pièce définissant une zone (Zb) de matière à enlever par l'outil de fraisage de finition (F) et tenant compte du rayon (Rf) de l'outil de fraisage de finition (F) employé pour la finition, d'au moins une valeur maximale (m) d'angle d'engagement pour ledit outil de fraisage de finition (F) lors de l'usinage et d'une trajectoire (Tf) de l'outil de fraisage de finition pour réaliser ledit premier profil préparé (Pb) ;
- Un module de détermination d'une première trajectoire (Ts0) de l'outil de fraisage de préparation (S) pour réaliser ledit premier profil préparé (Pb) de pièce ;
- Un module de détermination d'au moins une première zone (Z1) non usinable dudit premier profil préparé (Pb) par l'outil de fraisage de préparation (S) qui suit ladite première trajectoire (Ts0) déterminée en tenant compte du rayon (Rs) de l'outil de fraisage de préparation (S) ;
- Un module de détermination d'une deuxième trajectoire (Ts1) de l'outil de fraisage de préparation (S) pour réaliser un deuxième profil préparé (Ps) de pièce tenant compte du rayon (Rs) dudit outil de fraisage de préparation (S), dudit au moins premier profil préparé (Pb) de pièce et d'un profil final (Pp) de pièce obtenu après finition.

9. Système selon la revendication 8, **caractérisé en ce que** ladite trajectoire (Tf) de l'outil de fraisage de finition (F) pour réaliser ledit premier profil préparé (Pb) de pièce est déterminée en divisant en plusieurs portions une zone balayée par le mouvement de l'outil de fraisage de finition (F) avec ladite valeur maximale (m) d'angle d'engagement.

10. Système selon la revendication 8 ou 9, **caractérisé en ce qu'**il comporte un module de détermination d'un cercle ayant pour rayon ledit rayon (Rs) de l'outil de fraisage de préparation (S) et englobant ladite première zone (Z1) non usinable.

11. Système selon la revendication 10, **caractérisé en ce que** ledit cercle est déterminé en réalisant un diagramme de Voronoi sur le premier profil préparé (Pb) de pièce.

12. Système selon l'une des revendications 8 à 11, **caractérisé en ce qu'**il comporte :

- Un module de détermination d'au moins une deuxième zone (Zr) non usinable dudit deuxième profil préparé (Ps) par l'outil de fraisage de préparation (S) à partir dudit premier profil préparé (Pb) en suivant ladite deuxième trajectoire (Ts1);
- Un module de détermination d'un segment de déplacement (Su) sur lequel peut se déplacer l'outil de fraisage de préparation (S) pour usiner la dite deuxième zone (Zr) non usinable ;
- Un module de détermination d'une troisième trajectoire (Ts2) pour l'outil de fraisage de préparation entre un point situé sur la deuxième trajectoire (Ts1) et un point situé sur ledit segment de déplacement (Su) pour usiner ladite deuxième zone (Zr) non usinable.

13. Système selon la revendication 12, **caractérisé en ce qu'**il comporte un module agencé pour réaliser une réunion de la deuxième trajectoire (Ts1) et de la troisième trajectoire (Ts2).

14. Système selon la revendication 12 ou 13, **caractérisé en ce que** le segment de déplacement (Su) est obtenu en réalisant l'intersection entre une zone (Ze) obtenue par un décalage de la deuxième zone non usinable d'une valeur (Rs) de rayon de l'outil de fraisage de préparation (S) et d'une zone obtenue par un décalage du profil final (Pp) de pièce d'une valeur (Rs) du rayon de l'outil de fraisage de préparation (S).

15. Programme d'ordinateur comprenant des modules logiciels destinés à être exécutés sur un ordinateur pour mettre en œuvre le procédé tel que défini dans l'une des revendications 1 à 7.

16. Support de stockage lisible par un ordinateur comportant le programme d'ordinateur défini dans la revendication 15.

**Patentansprüche**

1. Verfahren zur Bestimmung des Wegs eines Vorbereitungsfräswerkzeugs (S), das zur Vorbereitung eines Stücks vor dessen Endbearbeitung durch ein Endbearbeitungsfräswerkzeug verwendet wird, **dadurch gekennzeichnet, dass** es die folgenden Schritte umfasst:

- Bestimmen eines ersten vorbereiteten Stückprofils (Pb), das einen Bereich (Zb) von Material definiert, das von dem Endbearbeitungsfräswerkzeug (F) abzutragen ist, und wobei der Radius (Rf) des Endbearbeitungsfräswerkzeugs (F) berücksichtigt wird, das für die Endbearbeitung verwendet wird, mindestens eines Eingriffswinkel-Maximalwerts (m) für das Endbearbeitungsfräswerkzeug (F) bei der Bearbeitung und einer Bahn (Tf) des Endbearbeitungsfräswerkzeugs, um das erste vorbereitete Profil (Pb) herzustellen;

- Bestimmen einer ersten Bahn (Ts0) des Vorbereitungsfräswerkzeugs (S), um das erste vorbereitete Stückprofil (Pb) herzustellen;
- Bestimmen mindestens eines ersten Bereichs (Z1) des ersten vorbereiteten Profils (Pb), der von dem Vorbereitungsfräswerkzeug (S) nicht bearbeitbar ist, das der bestimmten ersten Bahn (Ts0) folgt, wobei der Radius (Rs) des Vorbereitungsfräswerkzeugs (S) berücksichtigt wird;
- Bestimmen einer zweiten Bahn (Ts1) des Vorbereitungsfräswerkzeugs (S), um ein zweites vorbereitetes Stückprofil (Ps) herzustellen, wobei der Radius (Rs) des Vorbereitungsfräswerkzeugs (S), das mindestens erste vorbereitete Stückprofil (Pb) und ein endgültiges Stückprofil (Pp), das nach der Endbearbeitung erhalten wird, berücksichtigt wird.

2. Verfahren nach Anspruch 1, **dadurch gekennzeichnet, dass** die Bahn (Tf) des Endbearbeitungsfräswerkzeugs (F), um das erste vorbereitete Stückprofil (Pb) herzustellen, bestimmt wird, indem ein Bereich, der von der Bewegung des Endbearbeitungsfräswerkzeugs (F) mit dem Eingriffswinkel-Maximalwert (m) abgetastet wird, in mehrere Abschnitte aufgeteilt wird.

3. Verfahren nach Anspruch 1 oder 2, **dadurch gekennzeichnet, dass** es einen Schritt des Bestimmens eines Kreises umfasst, der als Radius den Radius (Rs) des Vorbereitungsfräswerkzeugs (S) aufweist und den nicht bearbeitbaren ersten Bereich (Z1) umfasst.

4. Verfahren nach Anspruch 3, **dadurch gekennzeichnet, dass** der Kreis durch Erstellung eines Voronoi-Diagramms auf dem ersten vorbereiteten Stückprofil (Pb) bestimmt wird.

5. Verfahren nach einem der Ansprüche 1 bis 4, **dadurch gekennzeichnet, dass** es Folgendes aufweist:

   - Einen zusätzlichen Schritt des Bestimmens mindestens eines zweiten Bereichs (Zr) des zweiten vorbereiteten Profils (Ps), der von dem Vorbereitungsfräswerkzeug (S) nicht bearbeitbar ist, anhand des ersten vorbereiteten Profils (Pb) durch Folgen der zweiten Bahn (Ts1);
   - Einen Schritt des Bestimmens eines Bewegungssegments (Su), auf dem sich das Vorbereitungsfräswerkzeug (S) bewegen kann, um den nicht bearbeitbaren zweiten Bereich (Zr) zu bearbeiten;
   - Einen Schritt des Bestimmens einer dritten Bahn (Ts2) für das Vorbereitungsfräswerkzeug zwischen einem Punkt, der auf der zweiten Bahn (Ts1) liegt, und einem Punkt, der auf dem Bewegungssegment (Su) liegt, um den nicht bearbeitbaren zweiten Bereich (Zr) zu bearbeiten.

6. Verfahren nach Anspruch 5, **dadurch gekennzeichnet, dass** es einen Schritt des Zusammenführens der zweiten Bahn (Ts1) und der dritten Bahn (Ts2) aufweist.

7. Verfahren nach Anspruch 5 oder 6, **dadurch gekennzeichnet, dass** das Bewegungssegment (Su) erhalten wird, indem eine Überschneidung zwischen einem Bereich (Ze), der durch eine Verschiebung des nicht bearbeitbaren zweiten Bereichs um einen Radiuswert (Rs) des Vorbereitungsfräswerkzeugs (S) erhalten wird, und einem Bereich, der durch eine Verschiebung des endgültigen Stückprofils (Pp) um einen Wert des Radius (Rs) des Vorbereitungsfräswerkzeugs (S) erhalten wird, hergestellt wird.

8. System zur Bestimmung des Wegs eines Vorbereitungsfräswerkzeugs (S), das zur Vorbereitung eines Stücks vor dessen Endbearbeitung durch ein Endbearbeitungsfräswerkzeug verwendet wird, **dadurch gekennzeichnet, dass** es Folgendes umfasst:

   - Ein Modul zum Bestimmen eines ersten vorbereiteten Stückprofils (Pb), das einen Bereich (Zb) von Material definiert, das von dem Endbearbeitungsfräswerkzeug (F) abzutragen ist, und wobei der Radius (Rf) des Endbearbeitungsfräswerkzeugs (F) berücksichtigt wird, das für die Endbearbeitung verwendet wird, mindestens eines Eingriffswinkel-Maximalwerts (m) für das Endbearbeitungsfräswerkzeug (F) bei der Bearbeitung und einer Bahn (Tf) des Endbearbeitungsfräswerkzeugs, um das erste vorbereitete Profil (Pb) herzustellen;
   - Ein Modul zum Bestimmen einer ersten Bahn (Ts0) des Vorbereitungsfräswerkzeugs (S), um das erste vorbereitete Stückprofil (Pb) herzustellen;
   - Ein Modul zum Bestimmen mindestens eines ersten Bereichs (Z1) des ersten vorbereiteten Profils (Pb), der von dem Vorbereitungsfräswerkzeug (S) nicht bearbeitbar ist, das der bestimmten ersten Bahn (Ts0) folgt, wobei der Radius (Rs) des Vorbereitungsfräswerkzeugs (S) berücksichtigt wird;
   - Ein Modul zum Bestimmen einer zweiten Bahn (Ts1) des Vorbereitungsfräswerkzeugs (S), um ein zweites vorbereitetes Stückprofil (Ps) herzustellen, wobei der Radius (Rs) des Vorbereitungsfräswerkzeugs (S), das mindestens erste vorbereitete Stückprofil (Pb) und ein endgültiges Stückprofil (Pp), das nach der Endbearbeitung erhalten wird, berücksichtigt wird.

9. System nach Anspruch 8, **dadurch gekennzeichnet, dass** die Bahn (Tf) des Endbearbeitungsfräswerkzeugs (F), um das erste vorbereitete Stückprofil (Pb) herzustellen, bestimmt wird, indem ein Bereich, der von der Bewegung des Endbearbeitungsfräswerkzeugs (F) mit dem Eingriffswinkel-Maximalwert (m) abgetastet wird, in mehrere Abschnitte aufgeteilt wird.

10. System nach Anspruch 8 oder 9, **dadurch gekennzeichnet, dass** es ein Modul zum Bestimmen eines Kreises umfasst, der als Radius den Radius (Rs) des Vorbereitungsfräswerkzeugs (S) aufweist und den nicht bearbeitbaren ersten Bereich (Z1) umfasst.

11. System nach Anspruch 10, **dadurch gekennzeichnet, dass** der Kreis durch Erstellung eines Voronoi-Diagramms auf dem ersten vorbereiteten Stückprofil (Pb) bestimmt wird.

12. System nach einem der Ansprüche 8 bis 11, **dadurch gekennzeichnet, dass** es Folgendes aufweist:

    - Ein Modul zum Bestimmen mindestens eines zweiten Bereichs (Zr) des zweiten vorbereiteten Profils (Ps), der von dem Vorbereitungsfräswerkzeug (S) nicht bearbeitbar ist, anhand des ersten vorbereiteten Profils (Pb) durch Folgen der zweiten Bahn (Ts1);
    - Ein Modul zum Bestimmen eines Bewegungssegments (Su), auf dem sich das Vorbereitungsfräswerkzeug (S) bewegen kann, um den nicht bearbeitbaren zweiten Bereich (Zr) zu bearbeiten;
    - Ein Modul zum Bestimmen einer dritten Bahn (Ts2) für das Vorbereitungsfräswerkzeug zwischen einem Punkt, der auf der zweiten Bahn (Ts1) liegt, und einem Punkt, der auf dem Bewegungssegment (Su) liegt, um den nicht bearbeitbaren zweiten Bereich (Zr) zu bearbeiten.

13. System nach Anspruch 12, **dadurch gekennzeichnet, dass** es ein Modul aufweist, das angeordnet ist, eine Zusammenführung der zweiten Bahn (Ts1) und der dritten Bahn (Ts2) vorzunehmen.

14. System nach Anspruch 12 oder 13, **dadurch gekennzeichnet, dass** das Bewegungssegment (Su) erhalten wird, indem die Überschneidung zwischen einem Bereich (Ze), der durch eine Verschiebung des nicht bearbeitbaren zweiten Bereichs um einen Radiuswert (Rs) des Vorbereitungsfräswerkzeugs (S) erhalten wird, und einem Bereich, der durch eine Verschiebung des endgültigen Stückprofils (Pp) um einen Wert des Radius (Rs) des Vorbereitungsfräswerkzeugs (S) erhalten wird, hergestellt wird.

15. Computerprogramm, umfassend Softwaremodule, die dazu bestimmt sind, auf einem Computer ausgeführt zu werden, um das Verfahren nach einem der Ansprüche 1 bis 7 umzusetzen.

16. Computerlesbares Speichermedium, welches das Computerprogramm nach Anspruch 15 aufweist.

**Claims**

1. Method for determining the path of a rough milling tool (S) used for preparing a workpiece prior to finishing using a finish milling tool, **characterized in that** it comprises the following steps:

    - determining a first roughed profile (Pb) of a workpiece defining a region (Zb) of material that is to be removed by the finish milling tool (F) and taking into account the radius (Rf) of the finish milling tool (F) used for finishing, at least a maximum value (m) for an engagement angle for said finish milling tool (F) during machining and a trajectory (Tf) of the finish milling tool for the purpose of creating said first roughed profile (Pb);
    - determining a first trajectory (Ts0) of the rough milling tool (S) for the purpose of creating said first roughed profile (Pb) of the workpiece;
    - determining at least one first region (Z1) of said first roughed profile (Pb) that cannot be machined by the rough milling tool (S) that follows said first trajectory (Ts0) taking into account the radius (Rs) of the rough milling tool (S);
    - determining a second trajectory (Ts1) of the rough milling tool (S) for the purpose of creating a second roughed profile (Ps) of the workpiece taking into account the radius (Rs) of said rough milling tool (S), said at least first roughed profile (Pb) of the workpiece and a final profile (Pp) of the workpiece obtained after finishing.

2. Method according to Claim 1, **characterized in that** said trajectory (Tf) of the finish milling tool (F) for the purpose of creating said first roughed profile (Pb) of the workpiece is determined by dividing, into multiple portions, a region swept by the movement of the finish milling tool (F) with said maximum value (m) for the engagement angle.

3. Method according to Claim 1 or 2, **characterized in that** it comprises a step of determining a circle whose radius is said radius (Rs) of the rough milling tool (S) and which encompasses said first non-machinable region (Z1).

4. Method according to Claim 3, **characterized in that** said circle is determined by creating a Voronoi diagram on the first roughed profile (Pb) of the workpiece.

5. Method according to one of Claims 1 to 4, **characterized in that** it comprises:

  - an additional step of determining at least one second region (Zr) of said second roughed profile (Ps) that cannot be machined by the rough milling tool (S) on the basis of said first roughed profile (Pb) following said second trajectory (Ts1);
  - a step of determining a displacement segment (Su) on which the rough milling tool (S) can move in order to machine said second non-machinable region (Zr);
  - a step of determining a third trajectory (Ts2) for the rough milling tool between a point located on the second trajectory (Ts1) and a point located on said displacement segment (Su) for the purpose of machining said second non-machinable region (Zr).

6. Method according to Claim 5, **characterized in that** it comprises a step of joining the second trajectory (Ts1) and the third trajectory (Ts2).

7. Method according to Claim 5 or 6, **characterized in that** the displacement segment (Su) is obtained by making an intersection between a region (Ze) obtained by offsetting the second non-machinable region by a value (Rs) of the radius of the rough milling tool (S) and a region obtained by offsetting the final profile (Pp) of the workpiece by a value (Rs) of the radius of the rough milling tool (S).

8. System for determining the path of a rough milling tool (S) used for preparing a workpiece prior to finishing using a finish milling tool, **characterized in that** it comprises:

  - a module for determining a first roughed profile (Pb) of the workpiece defining a region (Zb) of material to be removed by the finish milling tool (F) and taking into account the radius (Rf) of the finish milling tool (F) used for finishing, at least a maximum value (m) for an engagement angle for said finish milling tool (F) during machining and a trajectory (Tf) of the finish milling tool for the purpose of creating said first roughed profile (Pb);
  - a module for determining a first trajectory (Ts0) of the rough milling tool (S) for the purpose of creating said first roughed profile (Pb) of the workpiece;
  - a module for determining at least one first region (Z1) of said first roughed profile (Pb) that cannot be machined by the rough milling tool (S) that follows said first trajectory (Ts0) taking into account the radius (Rs) of the rough milling tool (S);
  - a module for determining a second trajectory (Ts1) of the rough milling tool (S) for the purpose of creating a second roughed profile (Ps) of the workpiece taking into account the radius (Rs) of said rough milling tool (S), said at least first roughed profile (Pb) of the workpiece and a final profile (Pp) of the workpiece obtained after finishing.

9. System according to Claim 8, **characterized in that** said trajectory (Tf) of the finish milling tool (F) for the purpose of creating said first roughed profile (Pb) of the workpiece is determined by dividing, into multiple portions, a region swept by the movement of the finish milling tool (F) with said maximum value (m) for the engagement angle.

10. System according to Claim 8 or 9, **characterized in that** it comprises a module for determining a circle whose radius is said radius (Rs) of the rough milling tool (S) and which encompasses said first non-machinable region (Z1).

11. System according to Claim 10, **characterized in that** said circle is determined by creating a Voronoi diagram on the first roughed profile (Pb) of the workpiece.

12. System according to one of Claims 8 to 11, **characterized in that** it comprises:

  - a module for determining at least one second region (Zr) of said second roughed profile (Ps) that cannot be machined by the rough milling tool (S) on the basis of said first roughed profile (Pb) following said second trajectory (Ts1);
  - a module for determining a displacement segment (Su) on which the rough milling tool (S) can move in order to machine said second non-machinable region (Zr);
  - a module for determining a third trajectory (Ts2) for the rough milling tool between a point located on the second trajectory (Ts1) and a point located on said displacement segment (Su) for the purpose of machining said second non-machinable region (Zr).

13. System according to Claim 12, **characterized in that** it comprises a module arranged to join the second trajectory (Ts1) and the third trajectory (Ts2).

14. System according to Claim 12 or 13, **characterized in that** the displacement segment (Su) is obtained by making an intersection between a region (Ze) obtained by offsetting the second non-machinable region by a value (Rs) of the radius of the rough milling tool (S) and a region obtained by offsetting the final profile (Pp) of the workpiece by a value (Rs) of the radius of the rough milling tool (S).

15. Computer program comprising software modules that are designed to be executed on a computer for carrying out the method as defined in one of Claims 1 to 7.

16. Computer-readable memory support comprising the computer program defined in Claim 15.

**Fig. 1**

**Fig. 2**

**Fig. 3A**

**Fig. 3B**

**Fig. 3C**

*Fig. 4A*

*Fig. 4B*

**Fig. 5**

**Fig. 6A**

*Fig. 6B*

*Fig. 6C*

*Fig. 6D*

*Fig. 6E*

*Fig. 7A*

*Fig. 7B*

## Fig. 7C

## Fig. 7D

*Fig. 7E*

Pb — Pp

Ts1

Zb

D — Ts2

Zr

Su

*Fig. 8*

Pp

Ps

Ts1 + Ts2

S

F

**EP 3 352 031 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013151000 A1